# EUROPEAN PATENT APPLICATION

(11) **EP 3 280 099 A1**
(43) Date of publication of application: **07.02.2018**
(21) Application number: 16771752.9
(22) Date of filing: 25.03.2016
(51) Int. Cl.: H04L 12/70

(54) **NETWORK SYSTEM, NETWORK CONTROL METHOD, AND CONTROL APPARATUS**

(30) Priority: 31.03.2015 JP 2015071222
(71) Applicant: NEC Corporation, Tokyo 108-8001 (JP)
(72) Inventor: SHINOHARA, Yusuke, Tokyo 108-8001 (JP)
(74) Representative: Robson, Aidan John
(86) International application number: PCT/JP2016/001745
(87) International publication number: WO 2016/157864

(57) **Abstract**

A network system, a network control method, and a control apparatus are provided that can optimize the deployment of virtual network functions. A network control apparatus (10) monitors virtual components (VMM, VM, VNF) on a physical server and physical components (SV, 21A, 21B, 21C) of a network and, based on network topology information concerning these components, manages at least one virtual network function (VNF) operating on the physical server, and performs setting control on at least one of the virtual components and the physical components so as to solve a problem when the problem occurs at at least one component on at least one of layers operating on the physical server.

## Description

### [Technical Field]

The present invention relates to a network system including virtual network functions, and more particularly to a method and an apparatus for controlling a network.

### [Background Art]

In current communication systems, various network functions (NFs) such as BRAS (Broadband Remote Access Server), NAT (Network Address Translation), router, and firewall are implemented by dedicated hardware equipment (appliances). Therefore, when a network operator launches a new network service, the network operator is forced to introduce new dedicated hardware equipment and requires a lot of costs such as purchase expenses, installation spaces and the like for the equipment. In the light of such circumstances, studies have been made in recent years on a technology (Network Function Virtualization) that uses software to virtually execute network functions, which have been executed by hardware equipment (NPL 1). As an example of network service virtualization, PTL 1 discloses a method by which a plurality of virtual routers are constructed on a communication node apparatus, and resources for these virtual routers are dynamically allocated according to communication quality.

Moreover, another technology has also been studied in which a communication flow is transmitted over a communication path in which a plurality of virtual network functions (VNFs) are combined, thereby providing various network services (for example, see NPL 2).

### [Citation List]

### [Patent Literature]

[PTL 1]
Japanese Patent Application Unexamined Publication No. 2012-175418

### [Non Patent Literature]

[NPL 1]
   Network Functions Virtualization – Update White Paper, October 15-17, 2013 at the "SDN and OpenFlow World Congress", Frankfurt-Germany (http://portal.etsi.org/NFV/NFV_White_Pater2.pdf)
[NPL 2]
   ETSI GS NFV 001 v1.1.1 (2013-10) "Network Functions Virtualisation (NFV); Use Cases" (http://docbox.etsi.org/ISG/NFV/Open/Published/gs_NFV001v010101p%20-%20Use%20 Cases.pdf)

### [Summary]

### [Technical Problem]

According to the above PTL and NPLs, VNF deployment and paths between VNFs are managed, but the VNF deployment determined in such a manner does not necessarily optimize throughput in an entire system. For example, if a physical server itself on which a VNF is operating is under an overloaded state, the performance of this VNF is lowered. As described above, throughput in an entire system cannot be optimized unless lower layers on which each VNF operates are taken into consideration.

For example, an actual VNF is activated on a virtual machine (VM), which is generated and managed on a virtual machine monitor (VMM), which, further, is implemented on a physical server. Accordingly, an actual network service passes through not only a VNF but also its lower layers, namely, a physical layer, VM, VMM, and the like. For example, if a failure or an overloaded state occurs at at least one of the VNF and its lower layers, degradation in the performance of the network service is caused, resulting in the performance of the entire system being lowered.

Accordingly, an object of the present invention is to provide a network system, a network control method, and a control apparatus that can optimize the deployment of virtual network functions.

### [Solution to Problem]

A network control apparatus according to the present invention is an apparatus for controlling a network, and is characterized by including: management means that monitors virtual components on a physical server included in the network and physical components of the network and, based on network topology information concerning these components, manages at least one virtual network function operating on the physical server; and control means that performs setting control on at least one of the virtual components and the physical components so as to solve a problem when the problem occurs at at least one component on at least one of layers operating on the physical server.

A network control method according to the present invention is a method for controlling a network, and is characterized by including: by management means, monitoring virtual components on a physical server included in the network and physical components of the network and, based on network topology information concerning these components, managing at least one virtual network function operating on the physical server; and by control means, performing setting control on at least one of the virtual components and the physical components so as to solve a problem when the problem occurs at at least one component on at least one of layers operating on the physical server.

A network system according to the present invention is a network system including a control apparatus for controlling a network, and is characterized in that the control apparatus includes: management means for monitoring virtual components on a physical server included in the network and physical components of the network and, based on network topology information concerning these components, managing at least one virtual network function operating on the physical server; and control means for performing setting control on at least one of the virtual components and the physical components so as to solve a problem when the problem occurs at at least one component on at least one of layers operating on the physical server.

A program according to the present invention is a program causing a computer to function as a network control apparatus, and is characterized by causing the computer to implement: a function of monitoring virtual components on a physical server included in a network and physical components of the network and, based on network topology information concerning these components, managing at least one virtual network function operating on the physical server; and a function of performing setting control on at least one of the virtual components and the physical components so as to solve a problem when the problem occurs at at least one component on at least one of layers operating on the physical server.

### [Advantageous Effects of Invention]

According to the present invention, it is possible to accomplish the optimal deployment of virtual network functions on a network.

### [Brief Description of Drawings]

[FIG. 1]

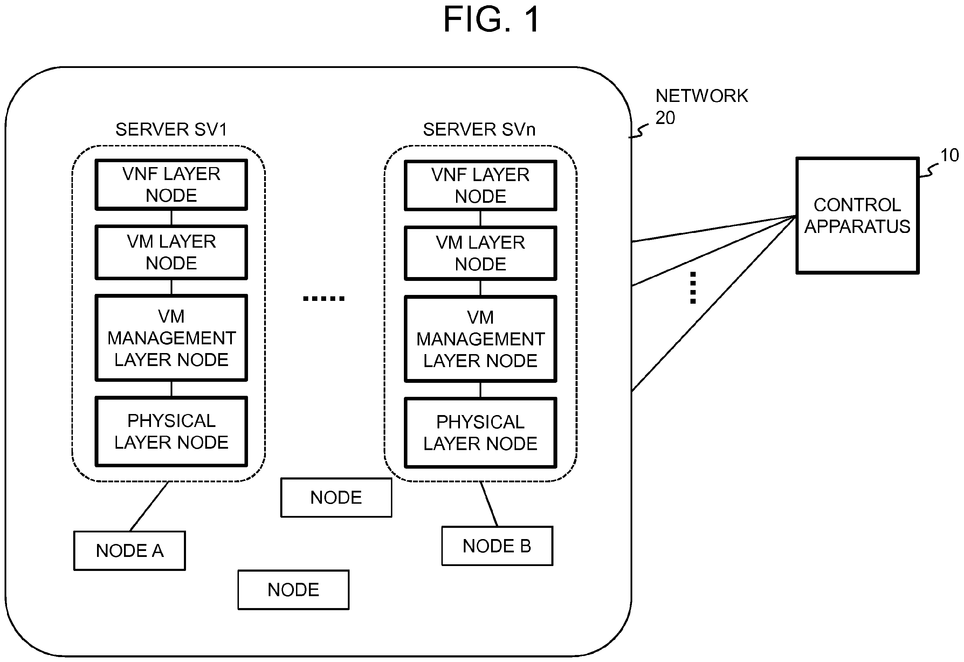

   FIG. 1 is a system architecture diagram showing an example of a network implementing an exemplary embodiment of the present invention.
[FIG. 2]

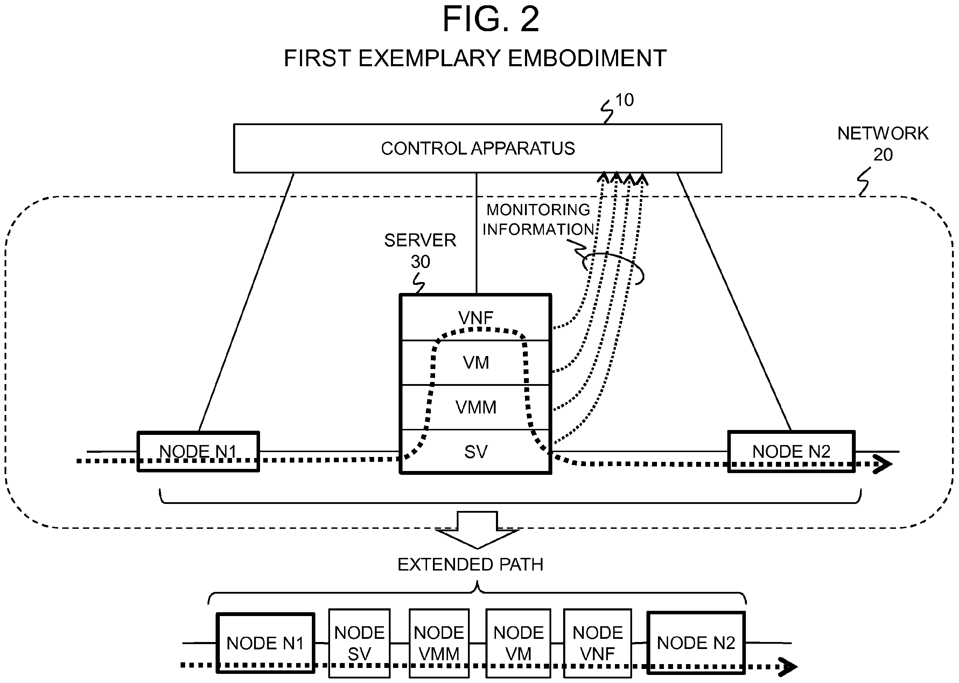

   FIG. 2 is a schematic network diagram for describing general operation in a network system according to a first exemplary embodiment of the present invention.
[FIG. 3]

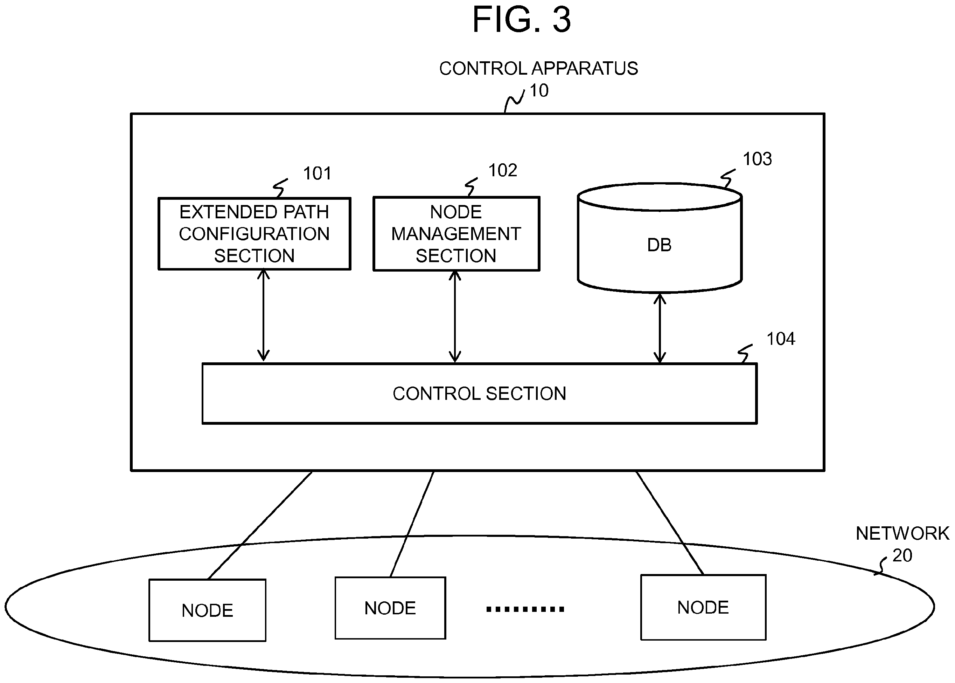

   FIG. 3 is a block diagram showing the schematic configuration of a control apparatus according to the first exemplary embodiment of the present invention.
[FIG. 4]

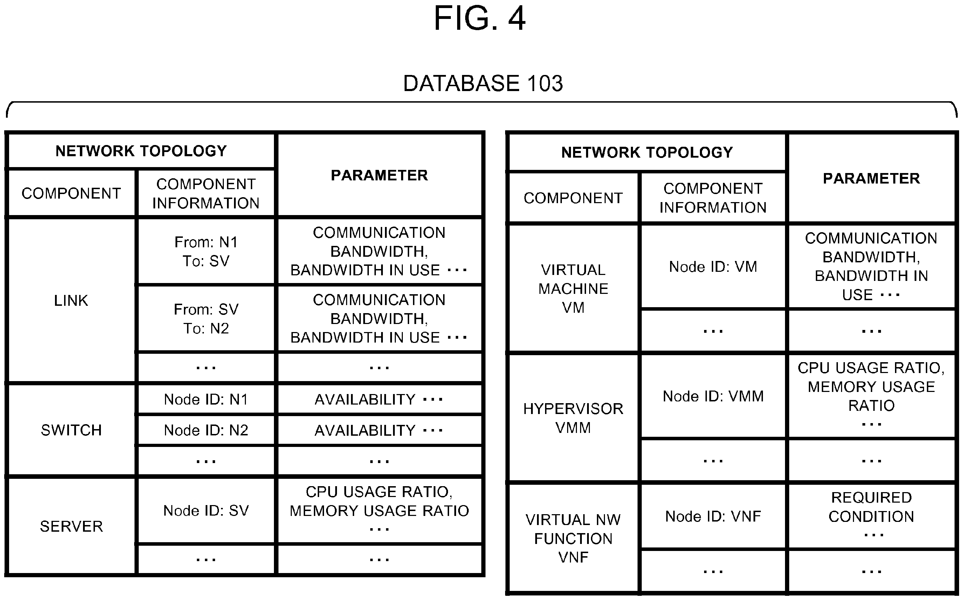

   FIG. 4 is a diagram showing an example of the data structure of a database provided to the control apparatus according to the first exemplary embodiment.
[FIG. 5]

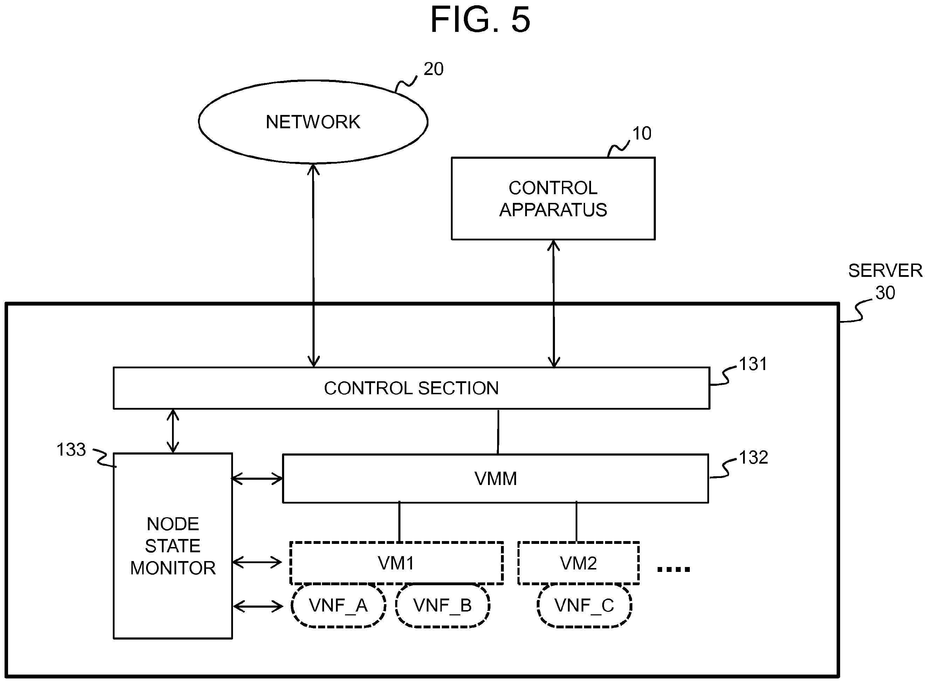

   FIG. 5 is a block diagram showing the schematic configuration of a server in the first exemplary embodiment.
[FIG. 6]

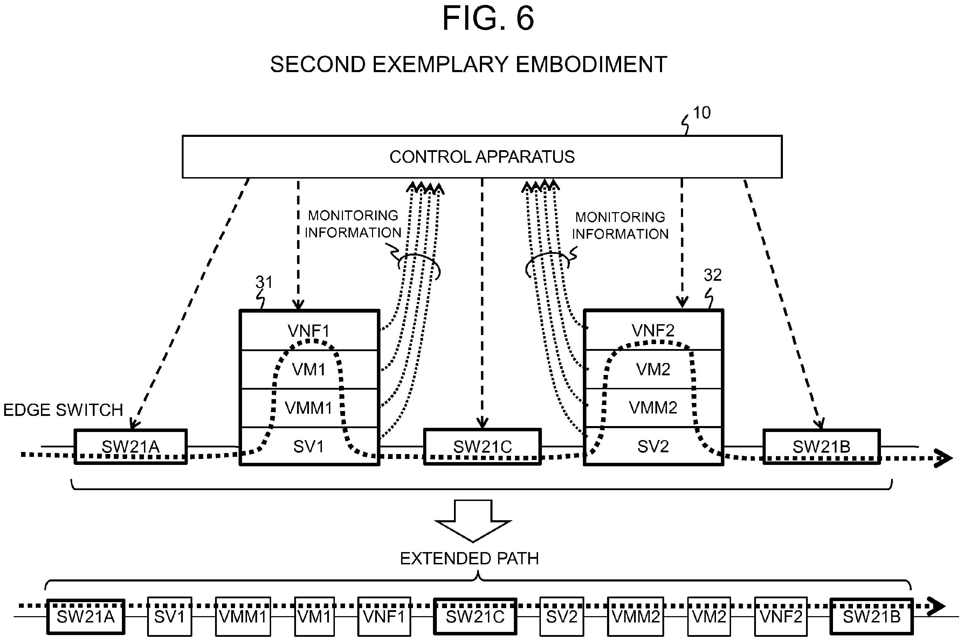

   FIG. 6 is a schematic network diagram for describing general operation in a network system according to a second exemplary embodiment of the present invention.
[FIG. 7]

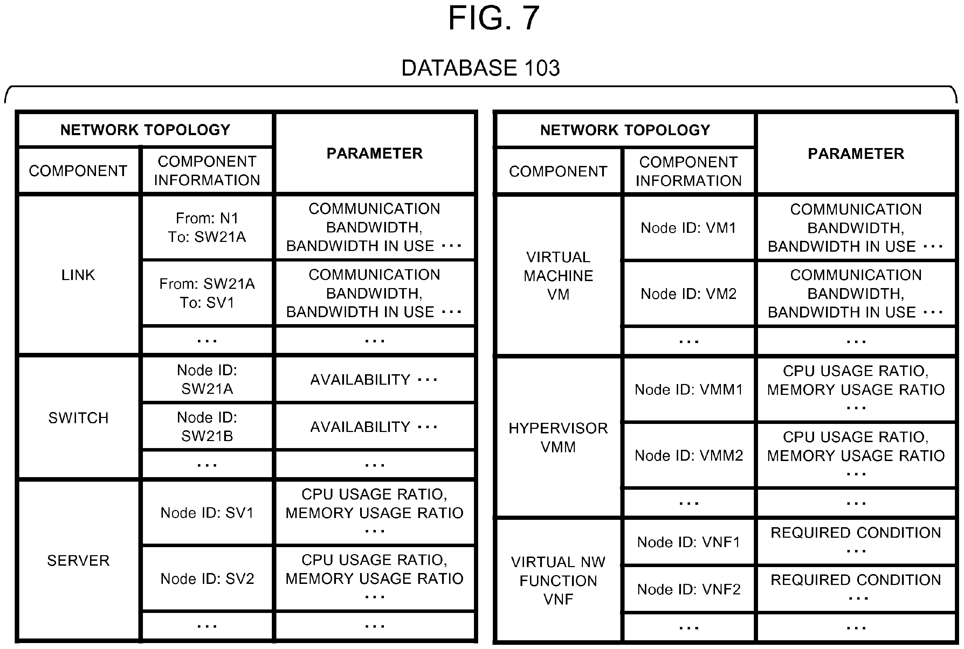

   FIG. 7 is a diagram showing an example of the data structure of a database provided to a control apparatus according to the second exemplary embodiment.
[FIG. 8]

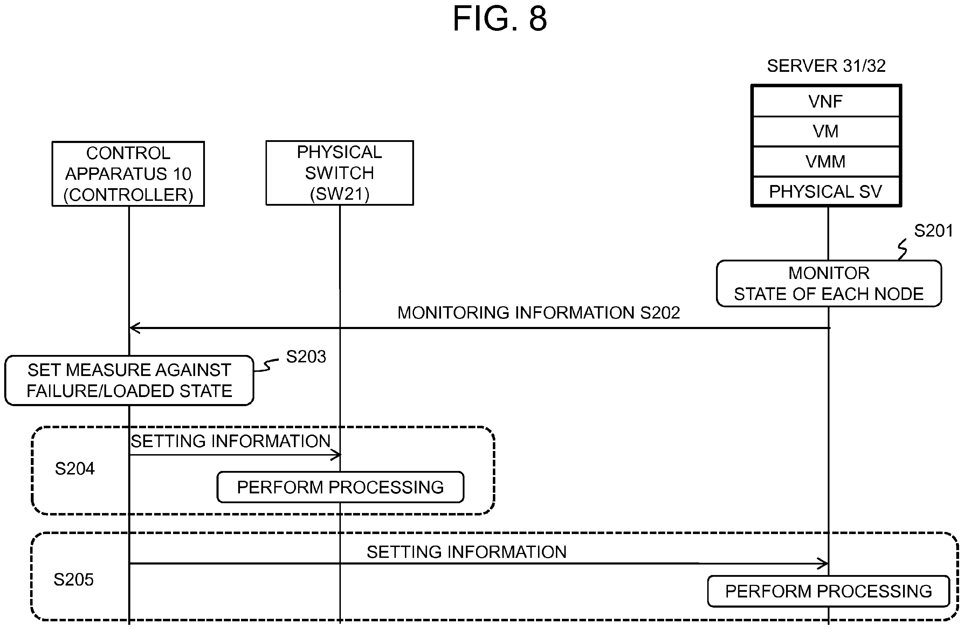

   FIG. 8 is a sequence chart showing operation in the network system according to the second exemplary embodiment.
[FIG. 9]

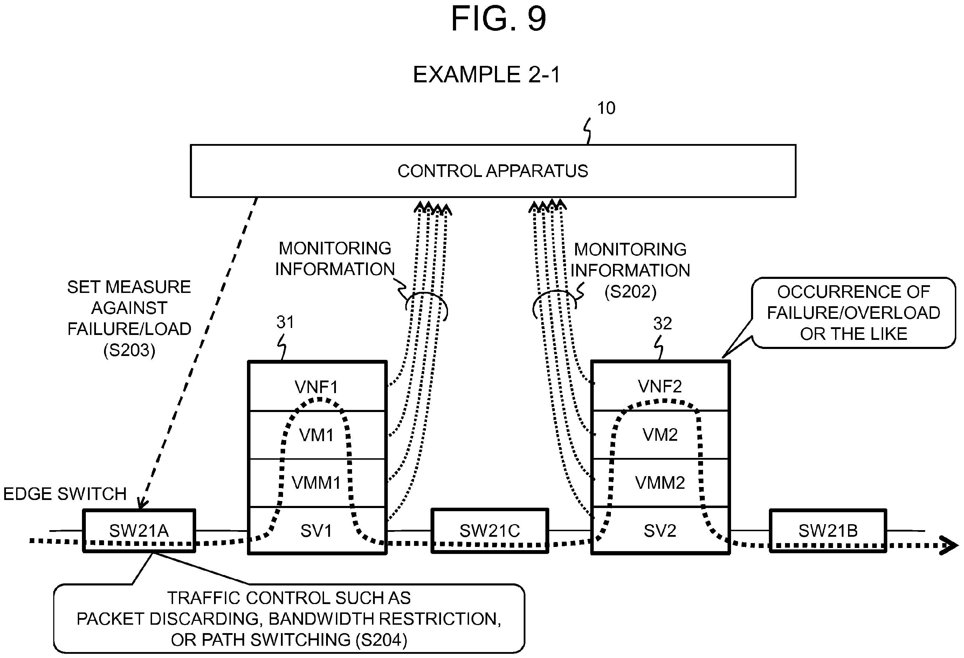

   FIG. 9 is a schematic network diagram for describing general operation in a network system according to an example 2-1 of the present invention.
[FIG. 10]

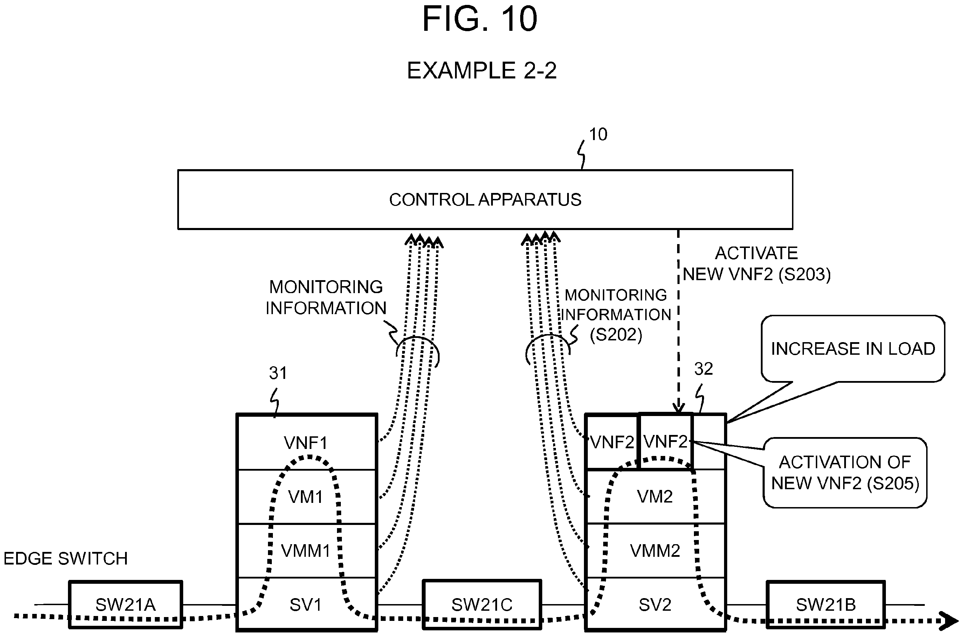

   FIG. 10 is a schematic network diagram for describing general operation in a network system according to an example 2-2 of the present invention.
[FIG. 11]

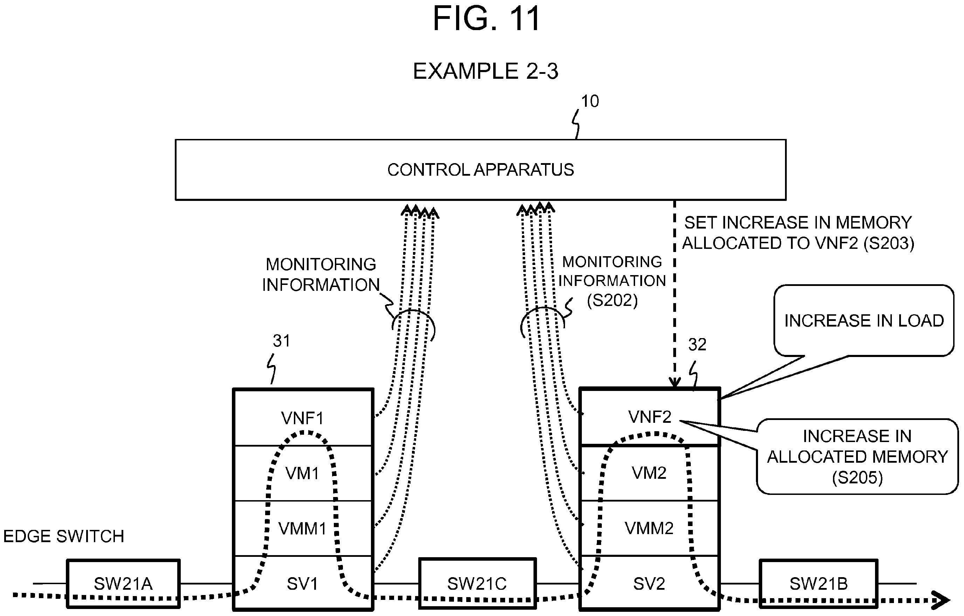

   FIG. 11 is a schematic network diagram for describing general operation in a network system according to an example 2-3 of the present invention.
[FIG. 12]

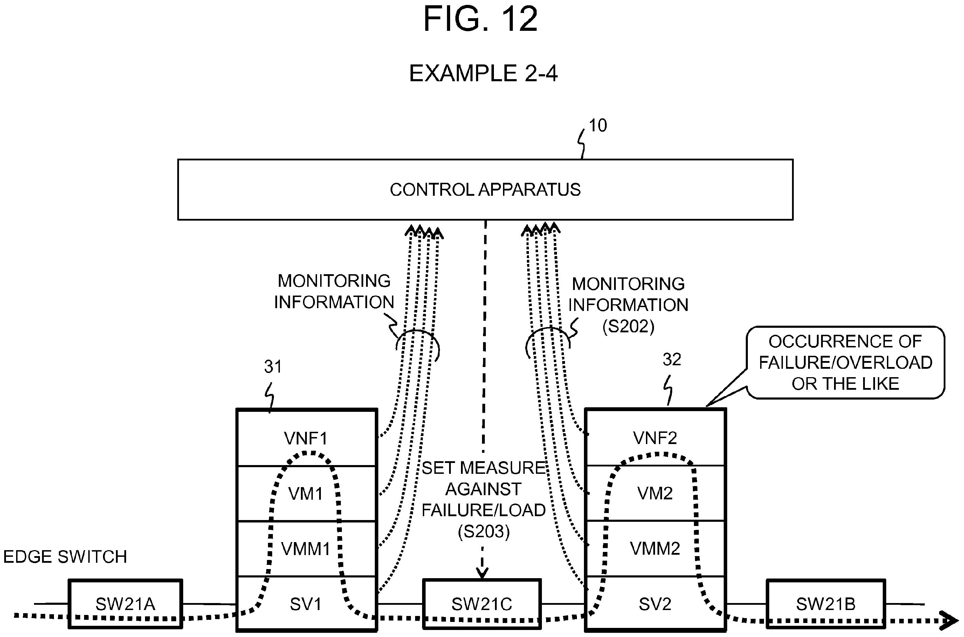

   FIG. 12 is a schematic network diagram for describing general operation in a network system according to an example 2-4 of the present invention.
[FIG. 13]

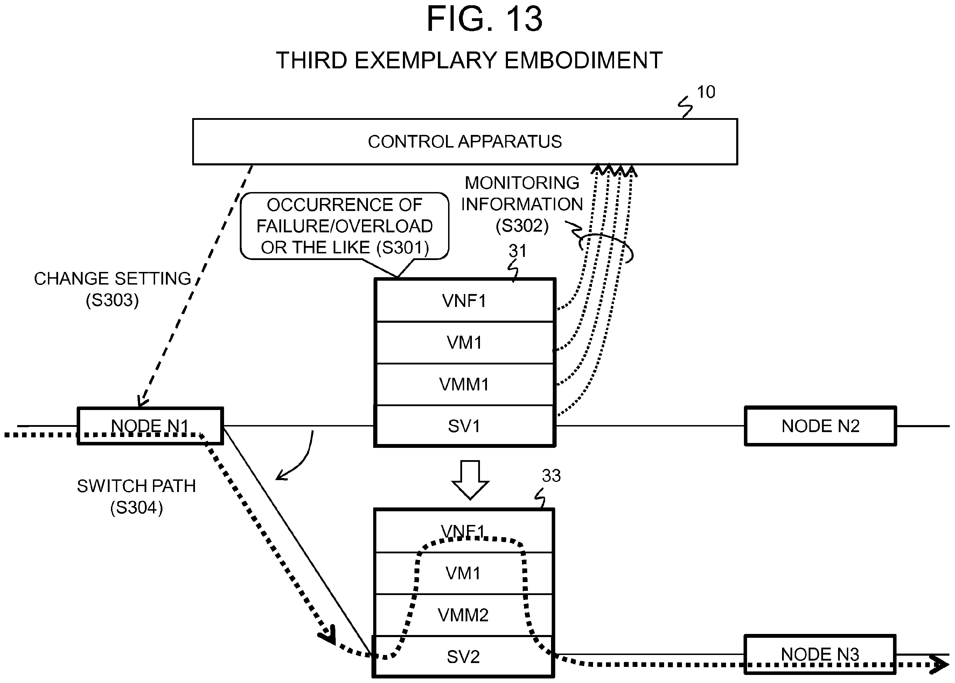

   FIG. 13 is a schematic network diagram for describing general operation in a network system according to a third exemplary embodiment of the present invention.
[FIG. 14]

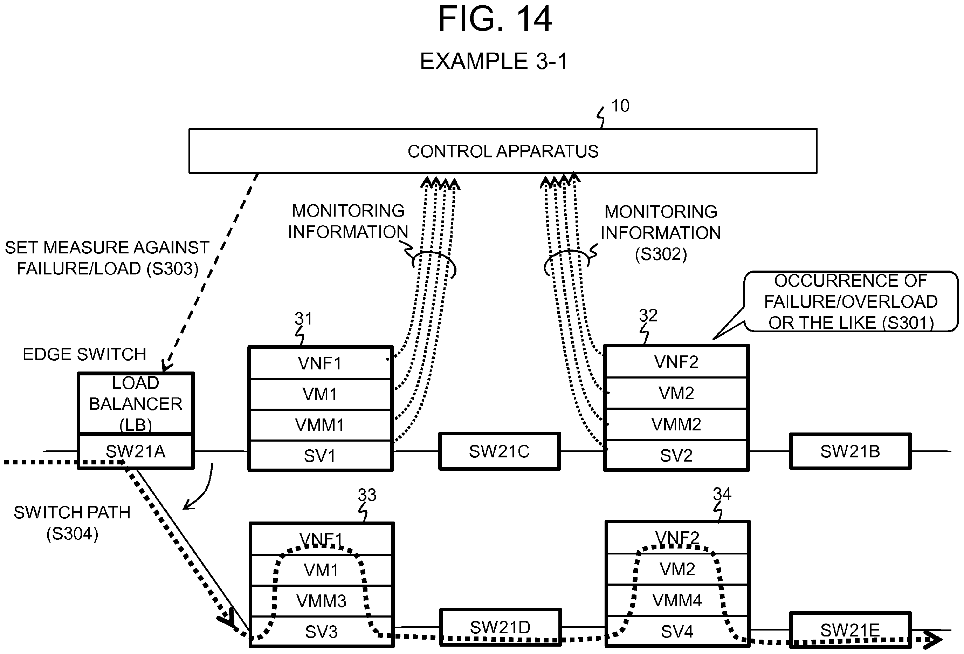

   FIG. 14 is a schematic network diagram for describing general operation in a network system according to an example 3-1 of the present invention.
[FIG. 15]

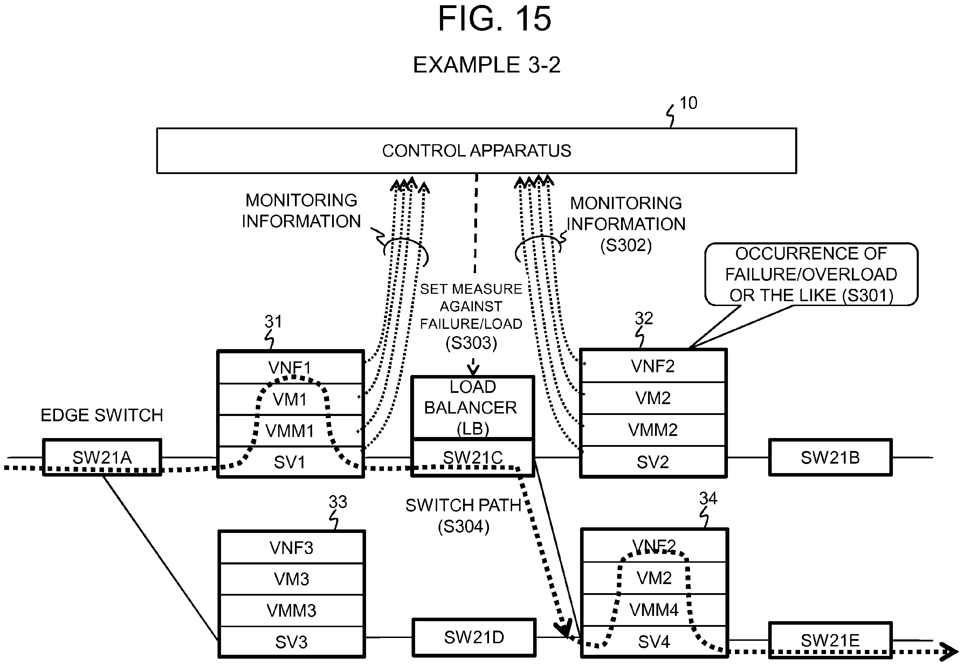

   FIG. 15 is a schematic network diagram for describing general operation in a network system according to an example 3-2 of the present invention.
[FIG. 16]

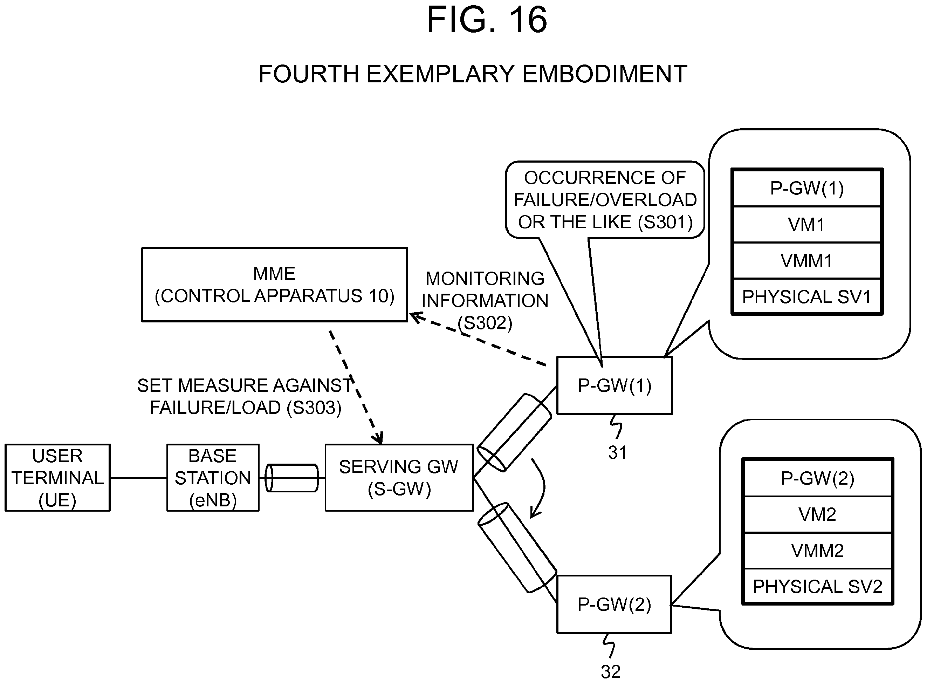

   FIG. 16 is a schematic network diagram for describing general operation in a network system according to a fourth exemplary embodiment of the present invention.
[FIG. 17]

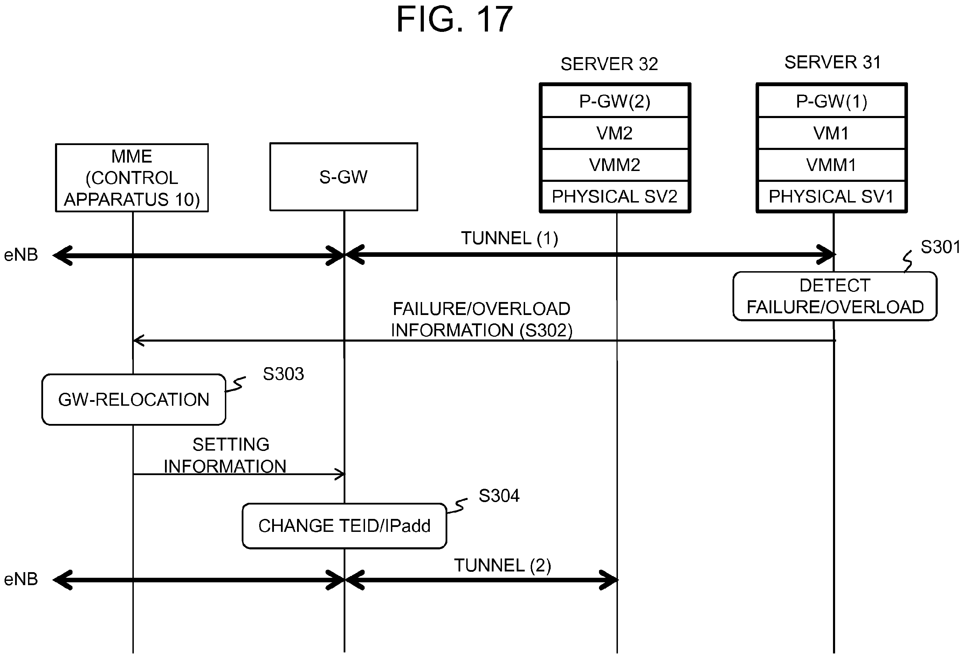

   FIG. 17 is a sequence chart showing operation in the network system according to the fourth exemplary embodiment.
[FIG. 18]

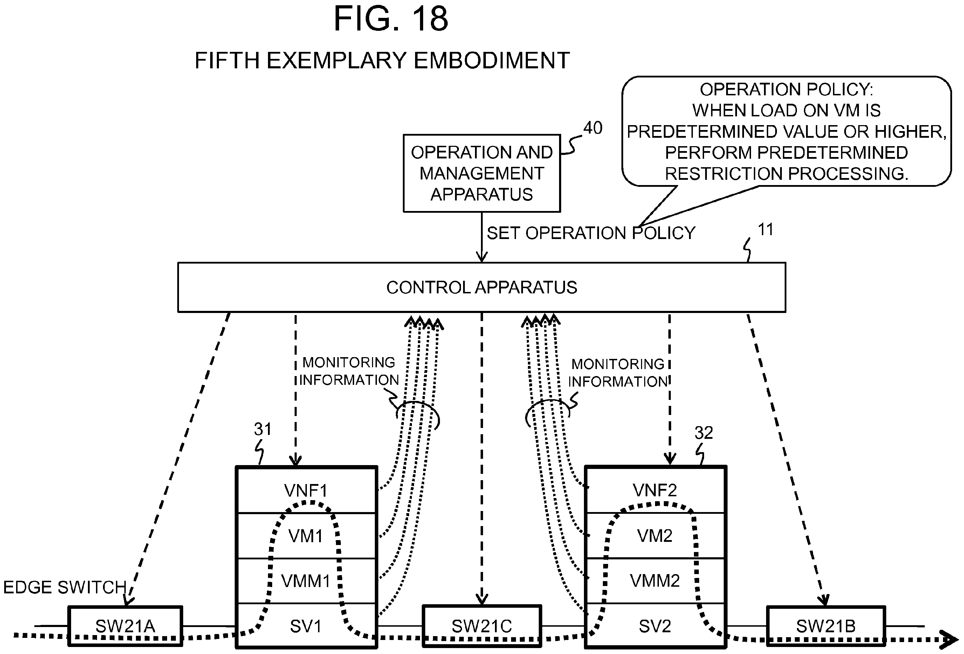

   FIG. 18 is a schematic network diagram for describing general operation in a network system according to a fifth exemplary embodiment of the present invention.
[FIG. 19]

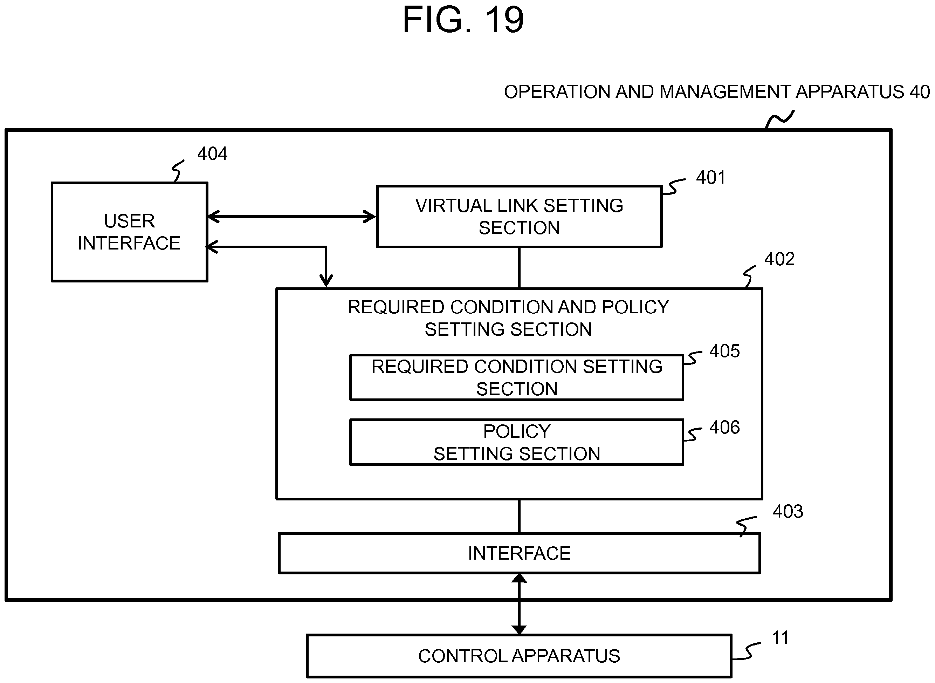

   FIG. 19 is a block diagram showing the schematic configuration of an operation and management apparatus in the network system according to the fifth exemplary embodiment.
[FIG. 20]

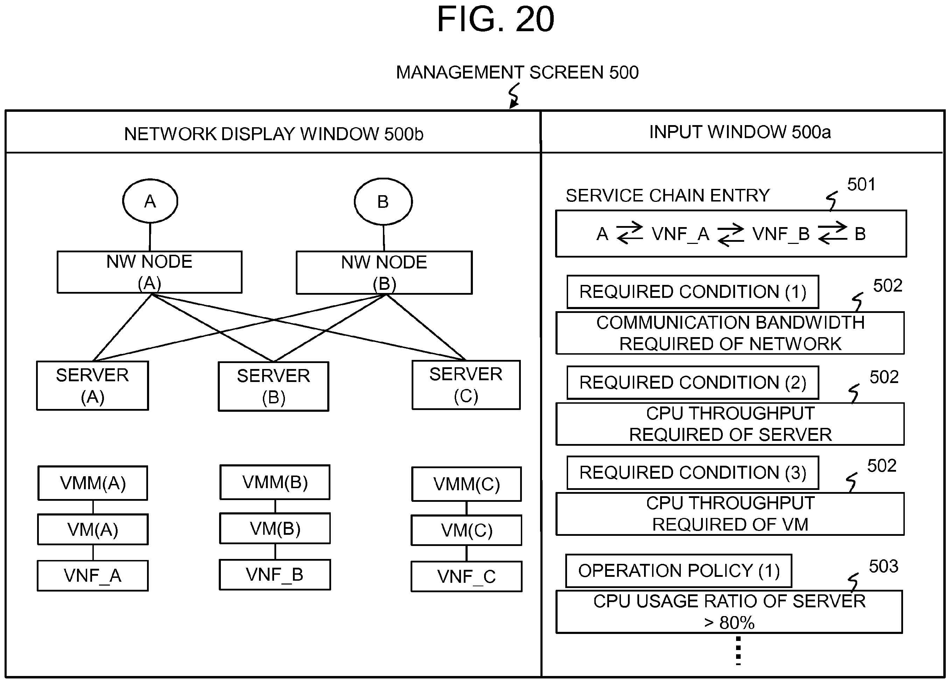

   FIG. 20 is a diagram schematically showing a display screen that is an example of network visualization by the operation and management apparatus in the fifth exemplary embodiment.
[FIG. 21]

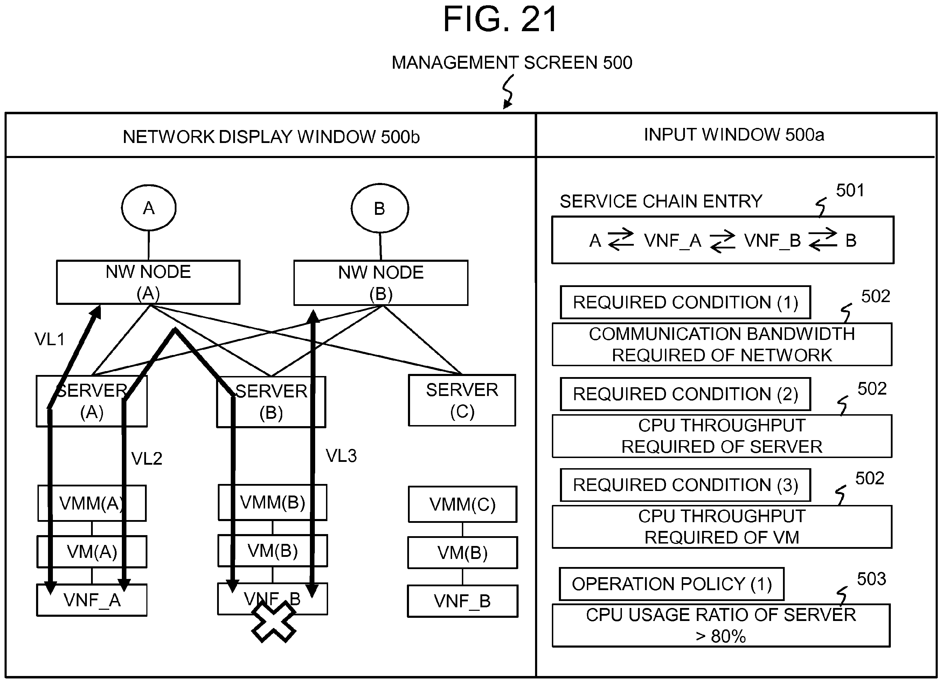

   FIG. 21 is a diagram schematically showing a display screen that is an example of service chain visualization by the operation and management apparatus in the fifth exemplary embodiment.
[FIG. 22]

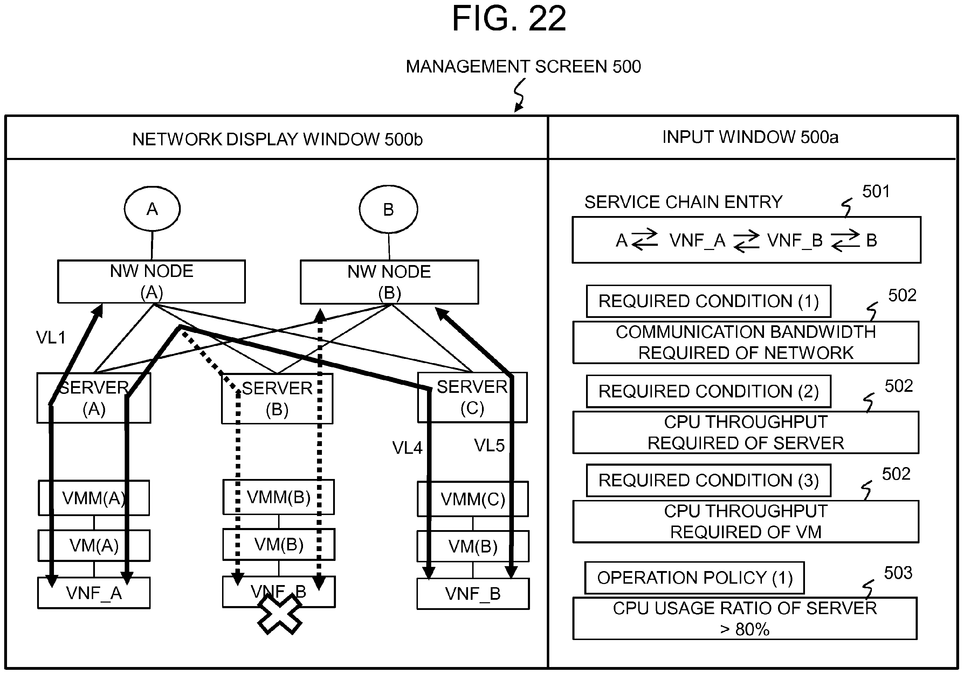

   FIG. 22 is a diagram schematically showing a display screen that is another example of service chain visualization by the operation and management apparatus in the fifth exemplary embodiment.
[FIG. 23]

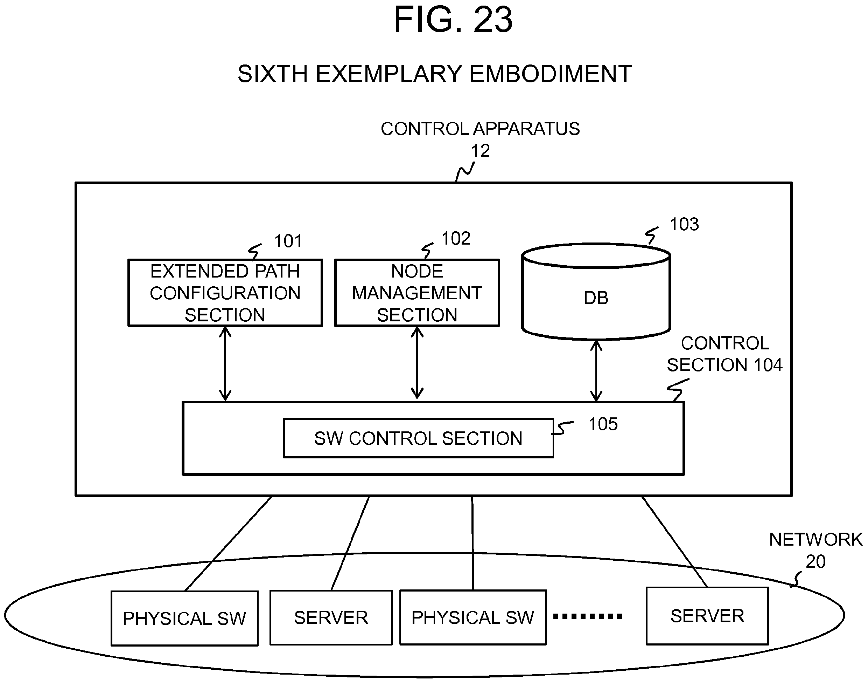

   FIG. 23 is a block diagram showing the schematic configuration of a control apparatus according to a sixth exemplary embodiment of the present invention.
[FIG. 24]

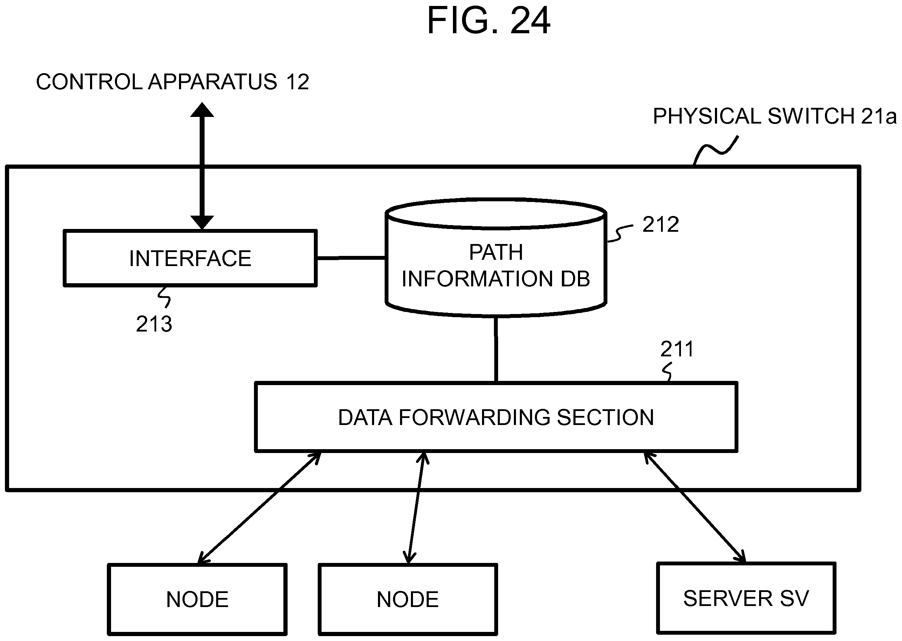

   FIG. 24 is a block diagram showing the schematic configuration of a physical switch in the sixth exemplary embodiment.
[FIG. 25]

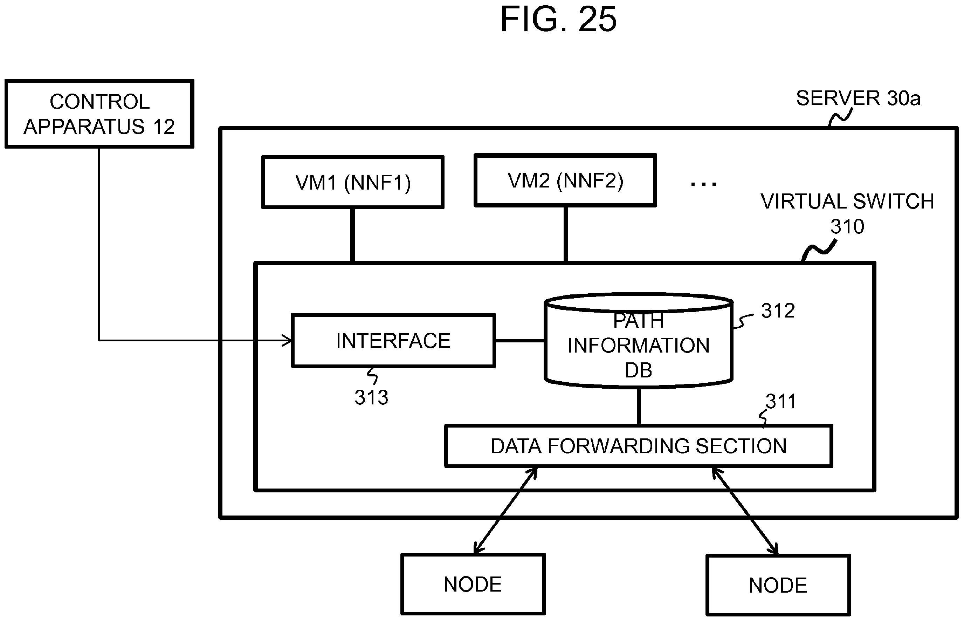

   FIG. 25 is a block diagram showing the schematic configuration of a server in the sixth exemplary embodiment.
[FIG. 26]

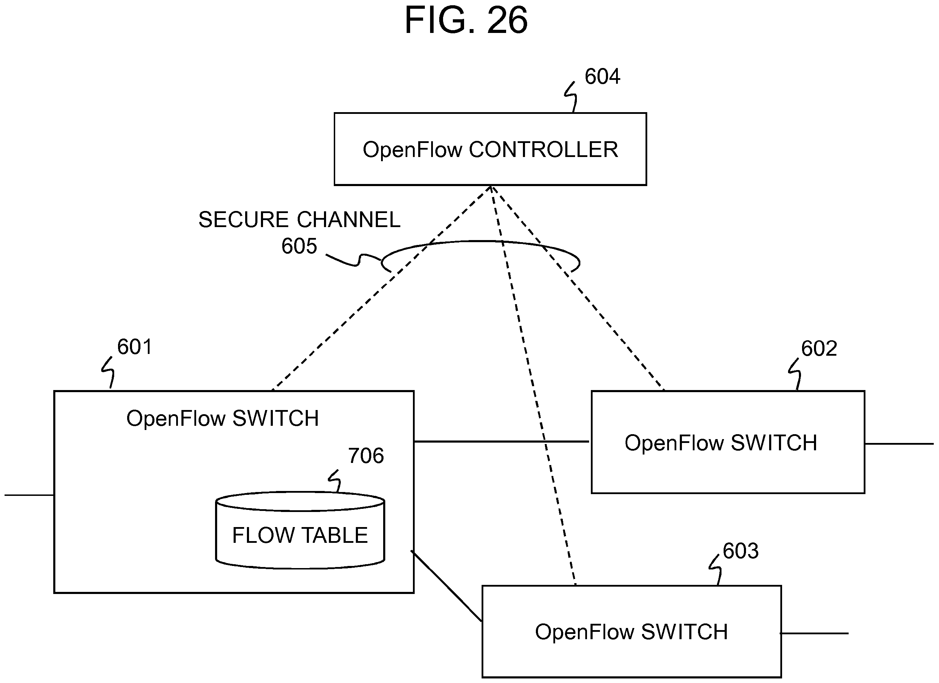

   FIG. 26 is a schematic system architecture diagram for describing OpenFlow technology employed in the sixth exemplary embodiment.
[FIG. 27]

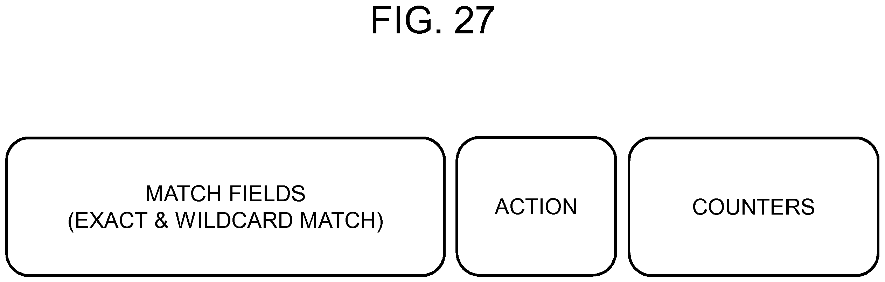

   FIG. 27 is a format diagram schematically showing the structure of an entry stored in a flow table in FIG. 26.

### [Detailed Description]

### A. Outline of embodiments

According to exemplary embodiments of the present invention, not only a virtual network function (VNF) but also each of its lower-layer components is viewed as one "node" for constituting a network service. Accordingly, a network service can be managed based on a path providing the network service that is configured with a VNF and its lower-layer nodes (hereinafter, referred to as an "extended path"). Management is performed taking into consideration different-layer resources from a VNF, whereby network service optimization can be realistically achieved. Hereinafter, an outline of exemplary embodiments of the present invention will be described with reference to a network system shown in FIG. 1.

### <System architecture>

Referring to FIG. 1, a control apparatus 10 controls a network 20, which includes physical nodes such as physical switches and servers that can provide VNFs, and controls VNF deployment and configuration based on an extended path, which will be described later. The network 20 includes a plurality of physical nodes and n (n: an integer not smaller than 1) physical servers SV1 to SVn, which are connected to their adjacent physical nodes or physical servers via physical links. Note that the control apparatus 10 may be provided within an operation and management apparatus of the network. Note that in the description below, the physical servers SV1 to SVn will be simply referred to as "server" in some cases.

Each server can have a multi-layer structure including a virtual network function (VNF) layer, a VM layer on which VNF is activated, a VM management layer that performs VM generation and management, and a physical layer that implements VM management functionality. Here, it is assumed that one or more VNFs constituting a network service can be individually deployed on the physical servers SV1 to SVn.

### <Extended path>

When each server has a multi-layer structure as described above, for example, a network service configured with one or more types of VNFs can be viewed as an extended path, which passes through not only the VNF on each server, but in actuality also passes through its lower layers, namely, a physical layer, a VM layer, a VM management layer, and the like. The control apparatus 10 manages the component resources on all layers including the VNF, based on such an extended path.

For example, when a failure or an overloaded state occurs on at least one of the VNF layer and its lower layers, the control apparatus 10 can identify it as a failure or an overloaded state at a node on an extended path, and can take an appropriate measure against the failure or overloaded state of this node.

More specifically, when a problem such as a failure or an overloaded state occurs on some layer, control can be performed for solving that problem on the same layer or a lower layer. For example, when a failure or an overloaded state occurs at a VNF or VM on some server, a measure can be taken, such as activating a new VM or restricting the bandwidth on a physical layer at an upstream node. Moreover, when a failure or an overloaded state occurs at some physical link or physical server, this can be dealt with by changing the path of a network service so that the location of the failure or overloaded state will be avoided, and activating the same VNF on a different server. In addition, such control for solving a problem can also be performed on a policy basis by using a management tool.

Management is performed by using an extended path as described above, whereby it is possible to optimize throughput in an entire system. Hereinafter, the exemplary embodiments of the present invention will be described specifically, using the multi-layer structure shown in FIG. 1 as an example. Note that a VM management layer node is also referred to as a virtual machine manager VMM or hypervisor.

### 1. First exemplary embodiment

### 1.1) System architecture

Referring to FIG. 2, a network system according to a first exemplary embodiment of the present invention includes a control apparatus 10 and a network 20 controlled by the control apparatus 10, and the network 20, to simplify the description, is assumed to include two physical nodes N1 and N2 and a server 30 deployed therebetween.

The server 30 has a multi-layer structure including a component SV on a physical layer for connecting to an adjacent node via a physical link, a component VMM on a VM management layer, a component VM on a VM layer, and a component VNF on a VNF layer, which is a network function. That is, in the server 30, a plurality of types of software (VMM, VM, VNF) are hierarchically activated on the physical-layer component SV. Accordingly, the virtual network function VNF in this example is viewed as an extended path including the physical nodes N1 and N2, physical links, and the layer components SV, VMM and VM on the server 30 as individual nodes, as described above.

### <Control apparatus>

As illustrated in FIG. 3, the control apparatus 10 according to the present exemplary embodiment includes an extended path configuration section 101, a node management section 102, a database 103, a control section 104, and a storage device (not shown). The control apparatus 10 collects network resource information and node information on the network 20 and controls path and node configuration so as to optimize a network service in the network 20 based on the extended path.

The extended path configuration section 101 refers to the database 103 and configures an extended path for connecting nodes required to constitute a specific network service. The node management section 102 manages nodes included in the extended path, that is, physical resources and virtual resources such as a physical switch, a virtual appliance, and a virtual machine. The database 103 stores network topology information concerning components and parameter information including the use state of each component, a required condition, and the like.

The control section 104 acquires monitoring information on physical links, physical nodes, and each of the above-described component nodes in the network 20 to configure the database 103, and also controls network service management operation performed by the above-described extended path configuration section 101, node management section 102, and database 103. Here, the monitoring information on each component node is resource information indicating the state of each node and is, for example, load information such as the amount of communication, CPU usage rate or bandwidth occupancy rate, or availability information indicating whether or not the node is available.

Note that the same functions as the extended path configuration section 101, node management section 102, and control section 104 can also be implemented by executing programs stored in a memory (not shown) on a CPU (Central Processing Unit) or a computer.

### <Database>

Referring to FIG. 4, the database 103 stores information about each-layer component, that is, information concerning physical nodes and virtual nodes to be managed. The stored information includes network topology information (components and component information) and its parameter information. The parameter information is information indicating the use state, availability/unavailability, or a required condition of each component, or the like, and can be updated each time monitoring information is acquired. Examples of the component information and parameter information corresponding to each component are as follows.

- When a component is a physical link, its connection relations are component information, and resource information (e.g., communication bandwidth, bandwidth in use, available bandwidth, and the like) of that node is parameter information.
- When a component is a physical switch, node identification information is component information, and resource information (e.g., information on availability/unavailability and the like) of that node is parameter information.
- When a component is a server, node identification information is component information, and resource information (e.g., load information such as CPU usage rate, memory usage rate, and memory available capacity) of that node is parameter information.
- When a component is a virtual machine VM, its node identification information is component information, and resource information (e.g., communication bandwidth, bandwidth in use, available bandwidth, and the like) of that node is parameter information.
- When a component is a virtual machine monitor (hypervisor), node identification information is component information, and resource information (e.g., load information such as CPU usage rate, memory usage rate, and memory available capacity) of that node is parameter information.
- When a component is a virtual network function (VNF), the node's identification information is component information, and resource information (e.g., request information such as required network communication bandwidth and required CPU throughput of a server or VM) of that node is parameter information.

### <Server>

Referring to FIG. 5, the server 30 includes a control section 131, a VMM 132, a node state monitor 133, and a storage device (not shown) providing memory. The VMM 132 generates and manages a plurality of virtual machines VM1, VM2, ... that are configured to execute a plurality of VNFs. The node state monitor 133 monitors component states (node states) on the VNF layer, VM layer, VMM layer, and physical server layer and stores monitoring information on these states. The control section 131 periodically, or in response to a request from the control apparatus 10, sends the monitoring information to the control apparatus 10. In that event, the monitoring information or any difference in the monitoring information may be sent to the control apparatus 10 only when such a difference occurs. Moreover, it is also possible for the server 30 to detect the presence/absence of a problem such as a failure or overload information of each node within itself and notifies the monitoring information along with the detection information. However, in the case of a system in which the server 30 forwards a received packet to the control apparatus 10, which analyzes and monitors component states, the node state monitor 133 is not needed for the server 30.

Note that the same functions as the control section 131, VMM 132, VM, VNF, and node state monitor 133 can also be implemented by executing programs stored in a memory (not shown) on a CPU (Central Processing Unit) of the server 30 or on a computer.

### 1.2) Operation

The control section 104 of the control apparatus 10 monitors the respective states of not only the physical nodes N1 and N2 and physical links but also the layer components SV, VMM, VM and VNF on the server 30 as monitoring information, and stores the acquired monitoring information in the database 103 in a format illustrated in FIG. 4.

The extended path configuration section 101 of the control apparatus 10 refers to the database 103 and configures a path (extended path) for connecting nodes required to constitute a specific network service. The node management section 102 manages the physical resources and virtual resources of an extended path including the plurality of layer's respective nodes, by referring to the database 103. When occurrence of a problem such as a failure or an overloaded state is detected at a node according to a result of the management by the node management section 102, the control section 104 can handle it per node so that the problem at this node will be solved.

### 1.3) Effects

As described above, according to the first exemplary embodiment of the present invention, a network service is managed based on an extended path that takes into consideration lower-layer resources below VNF, whereby the network service can be implemented through an optimal path. Further, based on monitoring information on each node in the extended path, the control apparatus 10 can change node or server setting so that the network service will be optimized.

### 2. Second exemplary embodiment

In a network system according to a second exemplary embodiment of the present invention, in order to solve a problem that has occurred on some layer, a setting change or the like can be made to the same-layer node or a different-layer node, in addition to management based on an extended path that takes into consideration lower-layer resources below VNF as in the above-described first exemplary embodiment.

For example, when a problem such as a failure or an overloaded stated occurs at an upper-layer node (e.g., a VNF-layer node) included in an extended path, a lower-layer node below the layer of this node (e.g., a VM-layer node, a physical-layer node) is controlled, whereby the problem can be solved. Hereinafter, the second exemplary embodiment will be described in detail with reference to FIGS. 6 to 12.

### 2.1) System architecture

Referring to FIG. 6, a network system according to the second exemplary embodiment of the present invention includes a control apparatus 10 and a network 20 controlled by the control apparatus 10, and the network 20 is assumed to include physical switches 21A, 21B and 21C, a server 31 deployed between the physical switches 21A and 21C, and a server 32 deployed between the physical switches 21C and 21B. Note that it is assumed that the physical switch 21A is an edge switch in the network 20.

The server 31 has a multi-layer structure including a physical-layer component SV1, a VM management-layer component VMM1, a VM-layer component VM1, and a VNF-layer component VNF1. That is, in the server 31, the plurality of types of virtual software (VMM1, VM1, VNF1) are hierarchically activated on the physical-layer component SV1. The server 32 similarly has a multi-layer structure including a physical-layer component SV2, a VM management-layer component VMM2, a VM-layer component VM2, and a VNF-layer component VNF2, and the plurality of types of virtual software (VMM2, VM2, VNF2) are hierarchically activated on the physical-layer component SV2.

Each of the virtual network functions VNF1 and VNF2 in this example is treated as a node included in an extended path that includes the physical switch 21A, a physical link, the layer components (SV1, VMM1, VM1, VNF1) of the server 31, a physical link, the physical switch 21C, a physical link, and the layer components (SV2, VMM2, VM2, VNF2) of the server 32, each as a node.

The control apparatus 10 has a configuration and functions similar to those of the first exemplary embodiment shown in FIG. 3. That is, the control section 104 acquires monitoring information from each node and stores it in the database 103 and, when the node management section 102 detects occurrence of a problem at a node, makes a setting change to the same-layer node or a different-layer node in order to solve the problem.

Referring to FIG. 7, the database 103 in the present exemplary embodiment stores network topology information (components and component information) corresponding to the system architecture shown in FIG. 6 and its parameter information. A data structure is similar to that of the first exemplary embodiment shown in FIG. 4, and therefore a description thereof will be omitted.

Moreover, the servers 31 and 32 also have a configuration similar to that of the server 30 shown in FIG. 5, and therefore a description thereof will be omitted.

### 2.2) Operation

Referring to FIG. 8, the node state monitors 133 of the servers 31 and 32 monitor the state of each component (node) (Operation S201) and send monitoring information on each node to the control apparatus 10 (Operation S202). Note that the monitoring information or any difference in the monitoring information may be sent to the control apparatus 10 only when such a difference occurs, as described above. Moreover, it is also possible that the presence/absence of a problem at each node is detected within the servers 31 and 32, and the monitoring information is notified along with information indicating the presence/absence of a problem.

The control apparatus 10 having acquired the monitoring information updates the database 103 based on the monitoring information and, when any problem such as a failure or an overloaded state occurs at a node, determines a node setting for solving the problem (Operation S203), and then processing for the setting is performed (Operation S204 or S205).

For example, if the control apparatus 10 notifies setting information to a physical switch, then processing such as discarding a packet, restricting the bandwidth, or switching the path is performed by this physical switch (Operation S204). Moreover, if the control apparatus 10 notifies setting information to the server 31 or 32, then processing such as activating a new VNF or increasing memory for VNF is performed by this server (Operation S205). Hereinafter, concrete examples of the present exemplary embodiment will be described in detail, using the system shown in FIG. 6 as an example.

### <Example 2-1>

According to an example 2-1 of the present invention, a problem that has occurred at a node on some layer is solved at an edge node that is present on a more upstream side than the node at which the problem has occurred. For example, when a VNF node on some server has fallen in an overloaded state, traffic to this VNF is limited at the edge node, whereby the overloaded state can be solved.

Referring to FIG. 9, the control apparatus 10 acquires monitoring information on each node from the network 20 (Operation S202) and is assumed to detect, based on an extended path as described above, that a problem such as a failure or an overloaded state has occurred at the VNF2 node. If this state is left as it is, processing on a packet such as discarding is performed upon the packet's arrival at the VNF2 node. Accordingly, the control apparatus 10 sends a setting for solving the problem such as a failure or an overloaded state to the physical switch 21A, which is an edge node for the traffic to this VNF2 (Operation S203). Thus, traffic control such as packet discarding, bandwidth restriction, or path switching is performed for the traffic to the VNF2 (Operation S204). Since the traffic is reduced at the edge switch 21A, the loads on the VNF1 and VNF2 nodes can be reduced.

### <Example 2-2>

According to an example 2-2 of the present invention, when an overload problem occurs at a node on some layer, a node with the same function is newly activated on this layer, whereby the overload problem is solved.

Referring to FIG. 10, the control apparatus 10 acquires monitoring information on each node from the network 20 (Operation S202) and is assumed to detect, based on an extended path as described above, that a problem of overloaded state has occurred at the VNF2 node. In this case, the control apparatus 10 instructs the server 32, where this VNF2 is activated, to activate a new VNF2 having the same function (Operations S203 and S205) as long as the throughput of the VM2 node is not affected. Thus, the VNF2 node throughput is increased, and the overloaded state of the VNF2 layer can be solved.

Similarly, if the VM2 node is in an overloaded state, the control apparatus 10 instructs the server 32, where this VM2 is activated, to activate a new VM2 and a new VNF2 having the same functions above the VMM2 layer as long as the throughput of the VMM2 node is not affected, whereby the load on the original VM2 node can be reduced.

### <Example 2-3>

According to an example 2-3 of the present invention, when an overload problem occurs at a node on some layer, the throughput of this node is enhanced by increasing memory allocated to this node, whereby the overload problem is solved.

Referring to FIG. 11, the control apparatus 10 acquires monitoring information on each node from the network 20 (Operation S202) and is assumed to detect, based on an extended path as described above, that a problem of overloaded state has occurred at the VNF2 node. In this case, the control apparatus 10 instructs the server 32 to increase memory or capacity to be allocated to this VNF2 (Operations S203 and S205) as long as the throughput of the VM2 node is not affected. Thus, the VNF2 node throughput is increased, and the overloaded state of the VNF2 layer can be solved.

Similarly, if the VM2 node is in an overloaded state, the control apparatus 10 instructs to increase memory or capacity to be allocated to this VM2 (Operations S203 and S205) as long as the throughput of the VMM2 node is not affected. Thus, the VM2 node throughput is increased, and the overloaded state of the VM2 layer can be solved.

### <Example 2-4>

An example 2-4 of the present invention is a modification example of the above-described first example, and a problem occurring at a node on some layer is solved at an upstream-side node directly adjacent to the node at which the problem has occurred.

Referring to FIG. 12, when occurrence of a failure or an overloaded state is detected at the VNF2 node on the server 32 based on an extended path as described above, the control apparatus 10 instructs the physical switch 21C, which is directly adjacent to the server 32, to restrict the traffic to this VNF2, whereby the overloaded state can be solved (Operation S203).

### 3. Third exemplary embodiment

In a network system according to a third exemplary embodiment of the present invention, in order to solve a problem that has occurred at some layer, a setting change is made to a physical switch that is present on the upstream side of the node at which the problem has occurred, in addition to management based on an extended path that takes into consideration lower-layer resources below VNF as in the above-described first exemplary embodiment, whereby the path of a network service is changed so as to avoid the node. Hereinafter, the third exemplary embodiment will be described in detail with reference to FIGS. 13 to 15.

### 3.1) System architecture

Referring to FIG. 13, the network system according to the third exemplary embodiment of the present invention includes a control apparatus 10 and a network 20 controlled by the control apparatus 10, and the network 20 is assumed to include physical nodes N1 to N3, a server 31 currently in use deployed between the physical nodes N1 and N2, and another server 33 deployed between the physical nodes N1 and N3. Note that the servers 31 and 33 have a multi-layer structure similar to that of the above-described exemplary embodiments, and it is assumed that at least on their respective VNF layers and VM layers, VNF1 nodes and VM1 nodes having the same functions are activated.

### 3.2) Operation

Referring to FIG. 13, it is assumed that VNF1 traffic is processed by the VNF1 on the server 31, and that a problem such as a failure or an overloaded state has occurred at this VNF node and its lower-layer nodes (Operation S301). The control apparatus 10 acquires monitoring information on each node from the network 20 (Operation S302) and detects the occurrence of the problem such as a failure or an overloaded state at the VNF1 layer and its lower layers of the server 31, based on an extended path as described above. In this case, the control apparatus 10 makes a setting change to the physical node N1 on the upstream side so that the path of the traffic to this VNF1 node will be changed to the server 33 (Operation S303). Thus, path switching is performed for the traffic to this VNF1 at the physical node N1 (Operation S304), and the same network service is provided via the server 33 on which the VNF1 having the same function as that of the server 31 is activated.

Note that it is also possible to use, for example, a migration technique in order to generate on the server 33 the VNF1 and VM1 that are the same as those of the server 31 currently in use. Moreover, the traffic path switching at the physical node N1 may be implemented by using a load balancer of the physical node N1. In this case, an instruction for a setting change from the control apparatus 10 is given to the load balancer. Hereinafter, concrete examples of the present exemplary embodiment will be described with reference to FIGS. 14 and 15.

### <Example 3-1>

Referring to FIG. 14, a network system according to an example 3-1 of the present invention includes a control apparatus 10 and a network 20 controlled by the control apparatus 10, and the network 20 is assumed to include physical switches 21A, 21B, 21C, 210 and 21E, a server 31 deployed between the physical switches 21A and 21C, a server 32 deployed between the physical switches 21C and 21B, a server 33 deployed between the physical switches 21A and 210, and a server 34 deployed between the physical switches 210 and 21E. Further, in the network 20, it is assumed that the physical switch 21A is an edge switch, and that a load balancer LB is physically or virtually provided to this physical switch 21A.

The servers 31 to 34 each have a multi-layer structure similar to that of the above-described exemplary embodiments, and it is assumed that on the servers 31 and 33, VNF1 nodes and VM1 nodes having the same functions are activated at least on their respective VNF layers and VM layers, and on the servers 32 and 34, VNF2 nodes and VM2 nodes having the same functions are activated at least on their respective VNF layers and VM layers.

Each of the virtual network functions VNF1 and VNF2 in this example is treated as a node included in an extended path that includes the physical switch 21A, a physical link, the individual layer components (SV1, VMM1, VM1, VNF1) of the server 31, a physical link, the physical switch 21C, a physical link, and the individual layer components (SV2, VMM2, VM2, VNF2) of the server 32, each as a node. Similarly, each of the virtual network functions VNF1 and VNF2 after path switching is treated as a node included in an extended path that includes the physical switch 21A, a physical link, the individual layer components (SV3, VMM3, VM1, VNF1) of the server 33, a physical link, the physical switch 21D, a physical link, and the individual layer components (SV4, VMM4, VM2, VNF2) of the server 34, each as a node.

The control apparatus 10 has a configuration and functions similar to those of the first exemplary embodiment shown in FIG. 3. That is, the control section 104 acquires monitoring information from each node in the network 20 and stores it in the database 103 and, when the node management section 102 detects occurrence of a problem at a node, makes a setting change for path switching to the load balancer of the edge node in order to solve the problem.

Referring to FIG. 14, it is assumed that VNF2 traffic is processed by the VNF2 on the server 32, and that a problem such as a failure or an overloaded state has occurred at this VNF2 node and its lower-layer nodes (Operation S301). The control apparatus 10 acquires monitoring information on each node from the network 20 (Operation S302) and detects the occurrence of the problem such as a failure or an overloaded state at the VNF2 layer and its lower layers of the server 32, based on an extended path as described above. In this case, the control apparatus 10 makes a setting change to the load balancer LB of the edge switch 21A so that all or part of the traffic to this VNF2 node is changed to a path on the servers 33 and 34 side (Operation S303). Thus, path switching is performed at least partially for the traffic to the VNF2 at the edge switch 21A (Operation S304), and the same network service as before the problem occurs can be configured via the servers 33 and 34 on which a VNF1 and a VNF2 having the same functions as those of the servers 31 and 32 are generated.

### <Example 3-2>

Referring to FIG. 15, a network system according to an example 3-2 of the present invention has an architecture similar to that of the above-described example 3-1, but it is assumed that load balancers LB are physically or virtually provided to the physical switches 21 other than the edge switch. Moreover, the servers 31 to 34 have a multi-layer structure similar to that of the above-described exemplary embodiments, and it is assumed that on the servers 32 and 34, VNF2 nodes and VM2 nodes having the same functions are activated at least on their respective VNF layers and VM layers.

Each of the virtual network functions VNF1 and VNF2 in this example is treated as a node included in an extended path that includes the physical switch 21A, a physical link, the layer components (SV1, VMM1, VM1, VNF1) of the server 31, a physical link, the physical switch 21C, a physical link, and the layer components (SV2, VMM2, VM2, VNF2) of the server 32, each as a node. Similarly, each of the virtual network functions VNF1 and VNF2 after path switching is treated as a node included in an extended path that includes the physical switch 21A, the physical link, the layer components (SV1, VMM1, VM1, VNF1) of the server 31, the physical link, the physical switch 21C, a physical link, and the layer components (SV4, VMM4, VM2, VNF2) of the server 34, each as a node.

The control apparatus 10 has a configuration and functions similar to those of the first exemplary embodiment shown in FIG. 3. That is, the control section 104 acquires monitoring information from each node in the network 20 and stores it in the database 103 and, when the node management section 102 detects occurrence of a problem at a node, makes a setting change for path switching to the load balancer of a physical switch that is present prior to this node in order to solve the problem.

Referring to FIG. 15, it is assumed that VNF2 traffic is processed by the VNF2 on the server 32, and that a problem such as a failure or an overloaded state has occurred at this VNF2 node and its lower-layer nodes (Operation S301). The control apparatus 10 acquires monitoring information on each node from the network 20 (Operation S302) and detects the occurrence of the problem such as a failure or an overloaded state at the VNF2 layer and its lower layers of the server 32, based on an extended path as described above. In this case, the control apparatus 10 makes a setting change to the load balancer LB of the physical switch 21C, which is located preceding the server 32, so that all or part of the traffic to this VNF2 node will be changed to a path on the server 34 side (Operation S303). Thus, path switching for all or part of the traffic to the VNF2 is performed at the physical switch 21C (Operation S304), and the same network service as before the problem occurs can be configured via the server 34 on which a VNF2 having the same function as that of the server 32 is generated.

### 4. Fourth exemplary embodiment

A system according to a fourth exemplary embodiment of the present invention is applicable to 3GPP systems.

Referring to FIG. 16, according to the present exemplary embodiment, the above-described control apparatus 10 corresponds to an MME (Mobile Management Entity), and the above-described VNF corresponds to a P-GW (Packet Data Network Gateway). That is, as shown in the drawing, servers 31 and 32 generate P-GW functionality on their respective VNF layers, and connections between the individual-layer nodes, P-GW, VM, VMM and SV, constitute an extended path.

Referring again to FIG. 16, a user terminal UE can wirelessly connect to a base station eNB and perform packet communication with an external network (Packet Data Network) through tunnels (GTP (GPRS Tunneling Protocol) tunnels) set up between the base station eNB and an S-GW (Serving Gateway) and between the S-GW and a P-GW. The control apparatus 10 as MME, as described already, collects monitoring information from the network system and stores it in the database 103 and, when a problem such as a failure or an overloaded state is detected at a some-layer node, instructs the S-GW to change the tunnel. Hereinafter, a description will be given of a case where a problem such as a failure or an overloaded state occurs at a P-GW(1) currently in use and the path of the traffic of the user terminal UE is changed.

Referring to FIG. 17, in a state where a tunnel (1) is configured between the S-GW and the P-GW(1) and the P-GW(1) is provided as a network function VNF by the server 31, it is assumed that a failure or an overloaded state is detected at the P-GW(1) and its lower-layer nodes (Operation S301) and failure/overload information is notified to the MME (Operation S302).

When receiving the failure/overload information from the server 31, the MME refers to the database 103 of the control apparatus 10 and performs P-GW relocation (Operation S303). The MME notifies setting information for P-GW relocation to the S-GW, and in accordance with the setting information, the S-GW changes the TEID (Tunnel Endpoint Identifier) or IP address of the tunnel, from the P-GW(1) on the server 31 to a P-GW(2) on the server 32 (Operation S304). Thus, a tunnel (2) between the S-GW and the P-GW(2) is configured, and the traffic of the user terminal UE is switched to the path passing through the P-GW(2).

As described above, according to the present example, in a 3GPP system, it is possible to perform management based on an extended path that takes into consideration lower-layer resources below VNF (P-GW). When a problem occurs on some layer, a change in tunnel setting is made to a switch (S-GW) that is present preceding the server 31 at which the problem has occurred, whereby it is possible to change a virtual network function path so as to avoid the server 31.

### 5. Fifth exemplary embodiment

According to a fifth exemplary embodiment of the present invention, an operation policy is set on a control apparatus for controlling a network 20, and the control apparatus performs network control similar to that of the above-described first to fourth exemplary embodiments in accordance with the operation policy. For example, it is possible to set on the control apparatus the operation policy that when a predetermined-layer node in an extended path bears a load of a predetermined value or higher, processing is performed, such as restricting the bandwidth of traffic passing through the relevant node, or changing the path so as to avoid the relevant node.

### 5.1) System architecture

Referring to FIG. 18, in a network system according to the fifth exemplary embodiment of the present invention, an operation and management apparatus 40 sets an operation policy on a control apparatus 11, and the control apparatus 11 controls the network 20 in accordance with the operation policy. The control apparatus 11 basically has the same configuration and functions as the control apparatus 10 shown in FIG. 3, but is different from the first to fourth exemplary embodiments in that an operation policy is stored in a storage device (not shown), and the control section 104 refers to the operation policy to perform control. The other configuration and functions are similar to those of the above-described first to fourth exemplary embodiments, and therefore a description thereof will be omitted by using the same reference signs as in FIG. 9. Note that the control apparatus 11 may be provided within the operation and management apparatus 40.

Referring to FIG. 18, when an operation policy is set in the operation and management apparatus 40 by an operator, the control apparatus 11 performs control of the network 20 in accordance with the operation policy set in the operation and management apparatus 40. As described above, the control apparatus 11 collects monitoring information from each node in the network 20 and updates the database 103. When detecting in accordance with the operation policy that a problem such as a failure or an overloaded state has occurred at a node, the control apparatus 11 sets processing for solving the problem on a node that is different from the node at which the problem has occurred. The node on which the measure has been set by the control apparatus 11 performs the set processing for relevant packets, thereby solving the problem.

The following are examples of parameters to be controlled in an operation policy.
- Operating ratios of VNF, VM, VMM, and physical server (operating ratio, usage amount, usage ratio, power consumption, or the like of CPU and/or memory)
- Communication bandwidth, bandwidth in use, usage ratio, traffic amount, or the like of physical link and virtual link
- Communication bandwidth, bandwidth in use, usage ratio, traffic amount, or the like of network service

When any of these parameters exceeds or falls below a predetermined threshold, the control apparatus 11 determines that a problem has occurred at this node, and performs processing for solving the problem on the network 20.

### 5.2) Operation and management apparatus

Referring to FIG. 19, the operation and management apparatus 40 includes a virtual link setting section 401, a required condition and policy setting section 402, an interface 403, and a user interface 404 and, apart from them, includes a control section and a storage section (not shown). The user interface 404 includes an information input section such as a keyboard and an information display section such as a monitor, enabling an operator to set a virtual link, a required condition, and an operation policy, and also enabling an extended node deployment on a network determined by the control apparatus 11 to be visualized, and the like.

The virtual link setting section 401 generates a virtual link based on a network service (also referred to as "service chain" in the present exemplary embodiment) entered by the operator via the user interface 404. The required condition and policy setting section 402 includes a required condition setting section 405 and a policy setting section 406 and generates a required condition and an operation policy used when configuring a service chain based on an input from the operator. Hereinafter, the operation of the operation and management apparatus 40 according to the present exemplary embodiment will be described with reference to FIGS. 20 to 22.

### 4.3) Visualization of extended path

A management screen 500 displayed on the user interface 404 is split into an input window 500a and a network display window 500b, as illustrated in FIG. 20. A service chain entry field 501, a plurality of required condition entry fields 502, and an operation policy entry field 503 are displayed on the input window 500a, while the physical topology and virtual nodes of a network that is the target of operation and management are displayed on the network display window 500b. For example, the operation and management apparatus 40 acquires topology information and virtual node information from the database 103 of the control apparatus 11 and displays the physical architecture of the network and the configuration of the virtual nodes based on the acquired information.

Referring to FIG. 20, in the network topology displayed as an example on the network display window 500b, each of network nodes A and B is connected to servers A, B and C via physical links. Moreover, three virtual network functions VNF_A, VNF_B and VNF_C can be deployed on each server, and each VNF's lower layers, VM and VMM, are displayed as virtual nodes individually. Hereinafter, to simplify the description, it is assumed that the VNF_A is activated on the server (A) and the same VM (B) and VNF_B are activated on each of the servers (B) and (C).

Referring to FIG. 21, it is assumed that the operator enters the following service chain in the service chain entry field 501 via the user interface 404:
A ⇔ VNF_A ⇔ VNF_B ⇔ B.

Further, it is assumed that a communication bandwidth required of the network and respective CPU throughputs/memory capacities required of the server and VM are entered in the required condition entry fields 502, and that the following operation policy is entered in the operation policy entry field 503: "When the CPU usage ratio of the server > 80%, the setting of the service chain shall be changed or the path shall be changed."

The required condition and policy setting section 402 sends and sets the above required conditions and operation policy to the control apparatus 11. Based on the required conditions and operation policy set by the operation and management apparatus 40, the control apparatus 11 generates, for example, virtual links VL1, VL2 and VL3 for an extended path as follows and sends them to the operation and management apparatus 40.
VL1: Source = NW node (A); Destination = VNF_A
VL2: Source = VNF_A; Destination = VNF_B (server B)
VL3: Source = VNF_B (server B); Destination = NW node (B)

The operation and management apparatus 40 displays the virtual links VL1, VL2 and VL3 for the above extended path on the network display window 500b, as shown in FIG. 21. In this state, it is assumed that the VNF_B node falls in an overloaded state, and the CPU usage ratio of its server (B) exceeds 80%.

Upon detecting, from monitoring information from the VNF_B node, VM (B) node, VMM (B) node, and physical server (B) node, that the CPU usage ratio of the server (B) has exceeded 80%, the control apparatus 11 notifies the operation and management apparatus 40 of information on the occurrence of a failure at the VNF_B node, and the operation and management apparatus 40 displays the occurrence of a failure at the VNF_B node on the network display window 500b.

Subsequently, the control apparatus 11 changes the setting of a switch of the node (A) preceding the server (B) while referring to the database 103, generates new virtual links VL1, VL4 and VL5 as follows, for example, as shown in FIG. 22 and sends them to the operation and management apparatus 40.
VL1: Source = NW node (A); Destination = VNF_A
VL2: Source = VNF_A; Destination = VNF_B (server C)
VL3: Source = VNF_B (server C); Destination = NW node (B)

Thus, even if a failure occurs at the VNF_B node and its lower-layer nodes on the server (B), the route of the extended path can be changed so that the problem will be solved, by changing the setting of the node (A) preceding the server (B).

Note that the same functions as the virtual link setting section 401 and required condition and policy setting section 402 of the operation and management apparatus 40 can also be implemented by using a processor (CPU: Central Processing Unit) for executing programs and storage devices such as a ROM (Read Only Memory) for storing the programs and a RAM (Random Access Memory) for storing information.

### 6. Sixth exemplary embodiment

A control apparatus according to a sixth exemplary embodiment of the present invention determines a path for a network service in a network based on an extended path according to any of the above-described exemplary embodiments, and controls physical switches and servers so that a communication flow will be forwarded along this path. Hereinafter, the sixth exemplary embodiment will be described in detail with reference to FIGS. 23 to 27.

### 6.1) System architecture

Referring to FIG. 23, in a control apparatus 12 according to the sixth exemplary embodiment of the present invention, the function of a switch control section 105 is added to the control section 104 of the control apparatus 10 shown in FIG. 3. The other basic configuration and functions are similar to those of the above-described exemplary embodiments, and therefore a description thereof will be omitted.

Referring to FIG. 24, a physical switch 21a, which is a network node in the sixth exemplary embodiment, includes a data forwarding section 211, a path information database 212, and an interface 213 for performing communication with the control apparatus 12. The physical switch 21a receives data including a condition for identifying a flow belonging to a network service and a forwarding destination of a packet of this flow from the control apparatus 12 and stores it in the path information database 212. The data forwarding section 211 identifies a packet of the flow belonging to the network service in accordance with the condition and forwarding destination information stored in the path information database 212 and forwards the packet to the corresponding forwarding destination (node or server).

Referring to FIG. 25, a server 30a in the sixth exemplary embodiment includes a plurality of virtual machines VM for executing a plurality of VNFs, respectively, and a virtual switch 310 for switching a communication flow between the plurality of virtual machines VM and adjacent network nodes.

The virtual switch 310 can be regarded as a switch in a network topology in the present exemplary embodiment, and includes a data forwarding section 311, a path information database 312, and an interface 313 for performing communication with the control apparatus 12. The virtual switch 310 receives data including a condition for identifying a flow belonging to a network service and a forwarding destination of a packet of this flow from the control apparatus 12 and stores it in the path information database 312. The data forwarding section 311 identifies whether or not a packet received from an adjacent network node or one of the virtual machines VM is of the flow belonging to the network service, in accordance with the condition and forwarding destination information stored in the path information database 312, and forwards the packet to the corresponding forwarding destination (virtual machine VM or network node). Accordingly, if packets are forwarded between virtual machines VM within a single server, it is possible to configure a network service without forwarding the packets to external network nodes.

Note that the control apparatus 12, physical switch 21a, and server 30a can also be implemented by using processors (CPU: Central Processing Unit) for executing programs for controlling the respective operations as described already, and storage devices such as ROMs (Read Only Memory) for storing the programs and RAMs (Random Access Memory) for storing information.

A centralized-control network architecture system, in which the control apparatus 12 sets information including a condition for identifying a flow belonging to a network service and a forwarding destination of a packet of this flow as described above, can be implemented by using, for example, OpenFlow, I2RS (Interface to the Routing System), ForCES (Forwarding and Control Element Separation), or the like. Hereinafter, an example of implementation of the control apparatus 12 and physical switch 21a/server 30a will be illustrated that uses OpenFlow.

### 6.2) OpenFlow

In OpenFlow, a communication is recognized as an end-to-end flow, and routing, failure recovery, load balancing, and the like are performed in units of flows. Here, a flow refers to, for example, a group of communication packets in series that have a predetermined property and, in the present exemplary embodiment, refers to a flow belonging to a configured network service. Hereinafter, OpenFlow will be described by using a network shown in FIG. 26 as an example.

Referring to FIG. 26, OpenFlow switches 601, 602 and 603 are network switches employing OpenFlow technology and, in the present exemplary embodiment, correspond to the physical switch 21a or the virtual switches 310 in the server 30a. An OpenFlow controller 604 is an information processing apparatus that controls the OpenFlow switches 601, 602 and 603 and, in the present exemplary embodiment, corresponds to the control apparatus 12.

A secure channel 605 is configured between each of the OpenFlow switches 601, 602 and 603 and the OpenFlow controller 604, and each OpenFlow switch communicates with the OpenFlow controller 604 through the secure channel 605. The OpenFlow controller 604 makes settings in a flow table 706 of each of the OpenFlow switches 601, 602 and 603 through the secure channel 605. Note that the secure channel 605 is a communication path between each of the OpenFlow switches 601, 602 and 603 and the controller 604 and is provided with measures for preventing communication tapping, manipulation, and the like.

FIG. 27 shows an example of the structure of each entry (flow entry) in the flow table 706 provided to each of the OpenFlow switches 601, 602 and 603. A flow entry includes fields (Match Fields) that define matching rules to be matched against information (e.g., a destination IP address, VLAN ID, and the like) included in a header of a packet received by a switch, a field (Counters) that indicates statistical information of each packet flow, and a field (Action) that defines a method for processing a packet that matches the matching rules.

The OpenFlow switch 601, 602, 603 refers to the flow table 706 when it receives a packet. The OpenFlow switch 601, 602, 603 searches for a flow entry that matches the header information of the received packet. If an entry that matches the header information of the received packet is retrieved, the OpenFlow switch 601, 602, 603 processes the received packet in accordance with a processing method defined in the Action field of the retrieved entry. For the processing method, defined are, for example, "forward a received packet from a predetermined port," "discard a received packet," and "rewrite part of the header of a received packet and forward to a predetermined port."

If any entry that matches the header information of the received packet is not found, the OpenFlow switch 601, 602, 603, for example, forwards the received packet to the OpenFlow controller 604 through the secure channel 605 and requests the OpenFlow controller 604 to set a flow entry that defines a method for processing the received packet.

The OpenFlow controller 604 determines a method for processing the received packet and sets a flow entry including the determined processing method in the flow table 706. Thereafter, the OpenFlow switch 601, 602, 603 processes subsequent packets belonging to the same flow as the received packet, based on the set flow entry.

### 6.3) Effects

According to the sixth exemplary embodiment of the present invention, a path for a network service is determined based on an extended path as in the first to fifth exemplary embodiments, and a node or server in the network is controlled so that a communication flow will be forwarded along this path. Accordingly, it is possible to achieve optimum VNF deployment, taking into consideration the communication characteristics and communication performance of an underlay network.

A plurality of virtual machines executing a plurality of VNFs, respectively, are configured within the server 30a in such a manner that they can be switched by a virtual switch. This in particular makes it possible to control path switching at a network node and virtual machine switching in a server in equivalent manners, enabling collective control using, for example, OpenFlow technology.

### [Industrial Applicability]

The present invention can be applied to a system for deploying virtual network functions (VNFs) on a network.

### [Reference Signs List]

10, 11, 12 Control apparatus
20 Network
21, 21A-21E Physical switch
30, 30a, 31-34 Server
40 Operation and management apparatus
101 Extended path configuration section
102 Node management section
104 Control section
105 Switch control section
131 Control section
132 VMM
133 Node state monitor
211 Data forwarding section
212 Path information database
213 Interface
401 Virtual link setting section
402 Required condition and policy setting section
403 Interface
404 User interface
405 Required condition setting section
406 Policy setting section

## Claims

1. An apparatus for controlling a network, **characterized by** comprising:
management means that monitors virtual components on a physical server included in the network and physical components of the network and, based on network topology information concerning these components, manages at least one virtual network function operating on the physical server; and
control means that performs setting control on at least one of the virtual components and the physical components so as to solve a problem when the problem occurs at at least one component on at least one of layers operating on the physical server.

2. The network control apparatus according to claim 1, **characterized in that** the management means monitors a virtual component for each layer on the physical server.

3. The network control apparatus according to claim 1 or 2, **characterized in that** the control means performs the setting control on a component on the same layer as, or a different layer from, the layer where the problem occurs.

4. The network control apparatus according to any one of claims 1 to 3, **characterized in that** when the problem occurs on any of the layers of the physical server, the control means performs the setting control on a component located at a more upstream side than the physical server so that traffic to the component at which the problem occurs will be controlled.

5. The network control apparatus according to claim 4, **characterized in that** the component located on the more upstream side than the physical server performs packet discarding, bandwidth restriction, and/or path switching for the traffic.

6. The network control apparatus according to claim 4 or 5, **characterized in that** the component located on the more upstream side than the physical server is a physical switch located preceding the physical server or a physical switch located at an edge of the network.

7. The network control apparatus according to any one of claims 4 to 6, **characterized in that** the component located on the more upstream side than the physical server is provided with a load balancer, wherein the control means performs the setting control on the load balancer.

8. The network control apparatus according to any one of claims 1 to 3, **characterized in that** when the problem occurs on any of the layers of the physical server, the control means performs the setting control so that throughput of the component on the layer where the problem occurs will be increased.

9. The network control apparatus according to claim 8, **characterized in that** a component having the same function as the component on the layer where the problem occurs is newly activated.

10. The network control apparatus according to claim 8, **characterized in that** a resource allocated to the component on the layer where the problem occurs is increased.

11. The network control apparatus according to any one of claims 1 to 10, **characterized in that** the network topology information is information concerning an extended path including virtual components on a layer of the virtual network function and lower layers thereof.

12. The network control apparatus according to claim 11, **characterized in that** the management means manages a network service configured with the virtual network function, based on the extended path.

13. A method for controlling a network, **characterized by** comprising:
by management means, monitoring virtual components on a physical server included in the network and physical components of the network and, based on network topology information concerning these components, managing at least one virtual network function operating on the physical server; and
by control means, performing setting control on at least one of the virtual components and the physical components so as to solve a problem when the problem occurs at at least one component on at least one of layers operating on the physical server.

14. The network control method according to claim 13, **characterized in that** the management means monitors a virtual component on each layer on the physical server.

15. The network control method according to claim 13 or 14, **characterized in that** the control means performs the setting control on a component on the same layer as, or a different layer from, the layer where the problem occurs.

16. The network control method according to any one of claims 13 to 15, **characterized in that** when the problem occurs on any of the layers of the physical server, the control means performs the setting control on a component located on a more upstream side than the physical server so that traffic to the component at which the problem occurs will be controlled.

17. The network control method according to claim 16, **characterized in that** the component located on the more upstream side than the physical server performs packet discarding, bandwidth restriction, and/or path switching for the traffic.

18. The network control method according to claim 16 or 17, **characterized in that** the component located on the more upstream side than the physical server is a physical switch located prior to the physical server or a physical switch located at an edge of the network.

19. The network control method according to any one of claims 16 to 18, **characterized in that** the component located on the more upstream side than the physical server is provided with a load balancer, and the control means performs the setting control on the load balancer.

20. The network control method according to any one of claims 13 to 15, **characterized in that** when the problem occurs on any of the layers of the physical server, the control means performs the setting control so that throughput of the component on the layer where the problem occurs will be increased.

21. The network control method according to claim 20, **characterized in that** a component having the same function as the component on the layer where the problem occurs is newly activated.

22. The network control method according to claim 20, **characterized in that** a resource allocated to the component on the layer where the problem occurs is increased.

23. The network control method according to any one of claims 13 to 22, **characterized in that** the network topology information is information concerning an extended path including virtual components on a layer of the virtual network function and lower layers thereof.

24. The network control method according to claim 23, **characterized in that** the management means manages a network service configured with the virtual network function, based on the extended path.

25. A network system including a control apparatus for controlling a network, **characterized in that**
the control apparatus comprises:
management means that monitors virtual components on a physical server included in the network and physical components of the network and, based on network topology information concerning these components, manages at least one virtual network function operating on the physical server; and
control means that performs setting control on at least one of the virtual components and the physical components so as to solve a problem when the problem occurs at at least one component on at least one of layers operating on the physical server.

26. The network system according to claim 25, **characterized in that** the management means monitors a virtual component on each layer on the physical server.

27. The network system according to claim 25 or 26, **characterized in that** the control means performs the setting control on a component on the same layer as, or a different layer from, the layer where the problem occurs.

28. The network system according to any one of claims 25 to 27, **characterized in that** when the problem occurs on any of the layers of the physical server, the control means performs the setting control on a component located on a more upstream side than the physical server so that traffic to the component at which the problem occurs will be controlled.

29. The network system according to any one of claims 25 to 27, **characterized in that** when the problem occurs on any of the layers of the physical server, the control means performs the setting control so that throughput of the component on the layer where the problem occurs will be increased.

30. The network system according to any one of claims 25 to 29, **characterized in that** the network topology information is information concerning an extended path including virtual components on a layer of the virtual network function and lower layers thereof.

31. The network system according to claim 30, **characterized in that** the management means manages a network service configured with the virtual network function, based on the extended path.

32. A program causing a computer to function as a network control apparatus, **characterized by** causing the computer to implement:
a function of monitoring virtual components on a physical server included in a network and physical components of the network and, based on network topology information concerning these components, managing at least one virtual network function operating on the physical server; and
a function of performing setting control on at least one of the virtual components and the physical components so as to solve a problem when the problem occurs at at least one component on at least one of layers operating on the physical server.
